Europäisches Patentamt

European Patent Office

Office européen des brevets

(19)

(11) Numéro de publication: **0 536 378 B1**

(12) **FASCICULE DE BREVET EUROPEEN**

(45) Date de publication du fascicule du brevet: **30.08.95**  (51) Int. Cl.⁶: **C01B 17/04**, B01D 53/34

(21) Numéro de dépôt: **92910323.2**

(22) Date de dépôt: **24.04.92**

(86) Numéro de dépôt internationale :
**PCT/FR92/00368**

(87) Numéro de publication internationale :
**WO 92/19532 (12.11.92 92/28)**

(54) **PROCEDE DE PRODUCTION DE SOUFRE A PARTIR D'AU MOINS UN GAZ ACIDE RENFERMANT DE L'HYDROGENE SULFURE ET D'UN EFFLUENT COMBUSTIBLE ET REACTEUR THERMIOUE.**

(30) Priorité: **25.04.91 FR 9105102**

(43) Date de publication de la demande:
**14.04.93 Bulletin 93/15**

(45) Mention de la délivrance du brevet:
**30.08.95 Bulletin 95/35**

(84) Etats contractants désignés:
**AT BE CH DE DK ES FR GB GR IT LI NL SE**

(56) Documents cités:
**EP-A- 0 325 286**
**FR-A- 2 424 875**
**US-A- 4 038 036**
**US-A- 4 438 069**
**US-A- 4 988 287**

(73) Titulaire: **ELF AOUITAINE PRODUCTION
Tour Elf
2 Place de la Coupole
La Défense 6
F-92400 Courbevoie (FR)**

(72) Inventeur: **KVASNIKOFF, Georges
Pré Marca
F-64360 Monein (FR)**
Inventeur: **NOUGAYREDE, Jean
13, rue du Professeur Jacques-Monod
F-64000 Pau (FR)**
Inventeur: **PHILIPPE, André
Lotissement de la Trinité
F-64300 Orthez (FR)**

(74) Mandataire: **Boillot, Marc
Elf Aquitaine Production
Département Propriété Industrielle
Tour Elf
Cédex 45
F-92078 Paris La Défense (FR)**

## Description

L'invention concerne un procédé de production de soufre à partir d'au moins un gaz acide renfermant de l'$H_2S$ et d'un effluent combustible gazeux ou liquide. Elle se rapporte encore à un réacteur thermique utilisable dans la mise en oeuvre dudit procédé.

La préparation du soufre à partir d'un gaz acide renfermant de l'hydrogène sulfuré par le procédé CLAUS consiste en une oxydation ménagée de l'hydrogène sulfuré par l'oxygène d'un gaz renfermant de l'oxygène libre, ladite oxydation étant prolongée au contact d'un catalyseur. Le gaz acide renfermant de l'hydrogène sulfuré est amené dans un étage de réaction thermique dans lequel environ un tiers de l'hydrogène sulfuré est transformé en $SO_2$ par combustion ménagée en présence d'un gaz renfermant de l'oxgène libre et une certaine quantité de soufre est formée. Le mélange gazeux réactionnel issu de l'étage de réaction thermique est ensuite soumis à un refroidissement indirect permettant de récupérer les calories qu'il contient en produisant de la vapeur, et ledit mélange refroidi est dirigé vers un étage de condensation dans lequel le soufre contenu dans le mélange gaseux est séparé par condensation. Pour pousser plus loin la production de soufre, qui à ce stade est encore très incomplète, le mélange gazeux issu de l'étage de condensation est réchauffé, puis amené à un étage de réaction catalytique renfermant un catalyseur approprié au contact duquel $SO_2$ et $H_2S$ présents dans ledit mélange réagissent l'un sur l'autre pour former une nouvelle quantité de soufre. La conversion catalytique nécessite généralement deux ou trois zones catalytiques, dont chacune est précédée d'un réchauffeur pour le mélange gazeux à traiter et suivie d'un condenseur dans lequel le soufre formé se sépare. Les gaz résiduaires issus de la dernière zone catalytique, qui renferment encore de faibles quantités de composés sulfurés tels que $H_2S$, $SO_2$, soufre vapeur ou/et vésiculaire, COS, $CS_2$, passent éventuellement dans un étage d'épuration, qui retient encore une forte proportion des composés sulfurés présents dans lesdits gaz résiduaires, avant d'être dirigés vers un étage d'incinération pour être ensuite rejetés à l'atmosphère.

Dans certains cas, on peut être amené, dans l'étage de réaction thermique, à effectuer la combustion d'un effluent combustible gazeux de manière concomitante à l'oxydation ménagée de l'$H_2S$. Ainsi, lorsque l'on dispose d'un effluent combustible consistant en un gaz résiduaire ou en un liquide renfermant des composés soufrés, notamment composés soufrés organiques, et éventuellement de l'ammoniac ou des composés générateurs d'ammoniac, la combustion précitée permet de détruire les composés soufrés et azotés de l'effluent combustible et de former du $SO_2$ à partir desdits composés soufrés, ce $SO_2$ s'ajoutant au $SO_2$ produit par l'oxydation ménagée de l'$H_2S$ du gaz acide. Un autre exemple d'une combustion telle que précitée se rencontre lors du traitement d'un gaz acide pauvre en $H_2S$ dans l'étage de réaction thermique, l'effluent combustible consistant alors en un gaz de chauffage, dont la combustion permet d'élever la température dans l'étage de réaction thermique à la valeur requise, ce qui ne peut pas être réalisé par la seule oxydation ménagée du gaz acide pauvre en $H_2S$.

Les procédés connus pour réaliser simultanément, d'une part, la combustion d'un effluent combustible gazeux ou liquide et, d'autre part, l'oxydation ménagée de l'$H_2S$ d'un gaz acide en opérant dans l'étage de réaction thermique d'une installation CLAUS de production de soufre, ne permettent pas de réaliser ce traitement sur une plage large de débits et de compositions en satisfaisant entièrement aux exigences liées a l'obtention, en sortie de l'étage de réaction thermique, d'un flux gazeux réactionnel ayant la qualité requise pour un traitement ultérieur dans l'étage catalytique de l'installation CLAUS, c'est-à-dire à l'obtention d'un flux gazeux renfermant $H_2S$, $SO_2$ et du soufre vapeur et quasiment exempt des impuretés $NH_3$, $SO_3$, hydrocarbures et oxydes d'azote.

L'invention a pour objet un procédé qui permet de réaliser simultanément la combustion totale d'un effluent gazeux ou liquide et l'oxydation ménagée de l'$H_2S$ d'au moins un gaz acide dans l'étage de réaction thermique d'un processus CLAUS de production de soufre, dans des conditions propres à produire, en sortie dudit étage de réaction thermique, un flux gazeux réactionnel renfermant $H_2S$, $SO_2$ et du soufre vapeur et ne renfermant quasiment aucune des impuretés mentionnées plus haut, dans une plage importante de débits et de compositions.

Le procédé selon l'invention est donc un procédé de production de soufre à partir d'au moins un gaz acide renfermant de l'$H_2S$ et d'un effluent combustible gazeux ou liquide, du type comportant une étape de réaction thermique, mise en oeuvre dans un étage de réaction thermique et consistant à réaliser une oxydation ménagée de l'$H_2S$ du gaz acide et une combustion complète de l'effluent combustible pour produire un flux gazeux renfermant $H_2S$, $SO_2$ et du soufre vapeur, puis une étape de refroidissement indirect dudit flux gazeux pour en séparer le soufre par condensation et ensuite une étape de réaction catalytique mise en oeuvre sur le flux gazeux issu de l'étape de refroidissement, et qui se caractérise en ce que l'on conduit l'étape de réaction thermique en effectuant la combustion de l'effluent combustible gazeux ou liquide dans une première zone de l'étage de réaction thermique avec une quantité d'un gaz renfermant de l'oxygène libre en exces par rapport à la quantité théorique nécessaire pour une combustion complète de l'effluent combustible, ledit excès étant inférieur à la proportion théorique de gaz renfermant de l'oxygène libre nécessaire pour oxyder en $SO_2$ environ un tiers de l'$H_2S$ du débit global de gaz acide à traiter, en injectant un premier courant de gaz acide dans les fumées de combustion de l'effluent combustible présentes dans ladite première zone de l'étage de réaction thermique, en brûlant incomplètement un deuxième courant de gaz acide dans une deuxième zone de l'étage de réaction thermique, qui reçoit les produits gazeux de la première zone, avec une quantité contrôlée de gaz renfermant de l'oxygène libre telle que le rapport molaire $H_2S:SO_2$ dans les gaz issus de l'étape de réaction catalytique ait une valeur prédéterminée, ladite valeur étant en particulier égale à environ 2:1, et en ajustant les débits des premier et deuxième courants de gaz acide de telle sorte que la température obtenue lors de la combustion incomplète du deuxième courant de gaz acide dans la deuxième zone de l'étage de réaction thermique soit supérieure à 850°C et plus particulièrement supérieure à 920°C.

Dans le procédé selon l'invention, l'effluent combustible est entièrement brûlé en présence d'un excès de gaz renfermant de l'oxygène libre. En outre, le fait d'injecter, sous la forme du premier courant de gaz acide, une fraction du débit global de gaz acide à traiter dans les fumées oxydantes de ladite combustion dans la première zone de l'étage de réaction thermique permet, au niveau du brûleur effectuant la combustion du deuxième courant de gaz acide dans la deuxième zone de l'étage de réaction thermique, d'avoir une température suffisante (supérieure à 850°C et plus particulièrement supérieure à 920°C) pour assurer la stabilité de flamme tout en autorisant l'obtention du rapport molaire $H_2S:SO_2$ désiré à la sortie de l'étage de réaction catalytique. En plus des avantages cités plus haut, le procédé selon l'invention permet, par rapport aux procédés connus, de traiter des débits plus importants d'effluents combustibles liquides ou gazeux pour un débit global donné de gaz acide.

Dans une forme avantageuse de mise en oeuvre du procédé selon l'invention, le flux gazeux issu de la deuxième zone de l'étage de réaction thermique traverse une zone de résidence des gaz, dans laquelle ledit flux gazeux est maintenu à une température égale ou voisine de sa température de sortie de ladite deuxième zone, avant d'être amené à l'étape de refroidissement précédant l'étape de réaction catalytique.

Le temps de séjour des gaz dans chacune des zones de l'étage de réaction thermique, y compris dans la zone de résidence des gaz lorsqu'elle est présente, peut varier assez largement et être assez différent ou au contraire sensiblement égal d'une zone à l'autre. Des valeurs satisfaisantes pour chacun desdits temps de séjour sont comprises en particulier entre 0,2 et 2 secondes.

Le premier courant ou/et le deuxième courant de gaz acide, qui sont traités par le procédé selon l'invention, peuvent renfermer des hydrocarbures en concentration globale comprise entre 0,2 et 10% et plus particulièrement entre 0,5 et 5% en volume.

Les premier et deuxième courants de gaz acide utilisés dans le procédé de l'invention peuvent consister en deux gaz acides distincts ayant des teneurs en $H_2S$ identiques ou différentes. Avantageusement la teneur en $H_2S$ du gaz acide constituant le premier courant de gaz acide est inférieure à celle du gaz acide formant le deuxième courant de gaz acide. Les premier et deuxième courants de gaz acide peuvent également consister, respectivement, en une première fraction d'un gaz acide unique et en la fraction restante de ce gaz acide.

Dans un mode de réalisation du procédé selon l'invention, l'effluent combustible est un effluent résiduaire gazeux ou liquide, qui renferme des composés soufrés oxydables en $SO_2$, notamment des composés organiques soufrés tels que des sulfures organiques et par exemple des disulfures d'alcoyle comme le disulfure de diméthyle et le disulfure de diéthyle, et éventuellement de l'ammoniac ou des composés azotés tels que HCN, tandis qu'au moins le deuxième courant de gaz acide a une teneur en $H_2S$ supérieure à 15 % en volume, le débit de l'effluent combustible et le débit global des premier et deuxième courants de gaz acide étant tels que le débit molaire X du $SO_2$ formé lors de la combustion de l'effluent combustible soit inférieur à la moïtié du débit molaire total Y de l'$H_2S$ amené par lesdits courants de gaz acide, tandis que l'excès de gaz renfermant de l'oxygène libre par rapport a la quantité théorique nécessaire pour une combustion complète de l'effluent combustible correspond à un débit molaire d'oxygène inférieur à

$$\frac{Y-2X}{2}$$

Dans un autre mode de réalisation du procédé selon l'invention, l'effluent combustible consiste en un gaz de chauffage, tandis que les premier et deuxième courants de gaz acide ont une teneur en $H_2S$ inférieure à 35% en volume.

Si besoin est, les réactifs, à savoir effluent combustible, gaz acide et air, que l'on amène à l'étage de réaction thermique, peuvent être préchauffés à une température pouvant aller jusqu'à environ 500°C avant leur injection dans ledit étage.

Le gaz renfermant de l'oxygène libre, utilisé pour la combustion de l'effluent combustible et pour la combustion incomplète de la seconde fraction du gaz acide, est généralement de l'air, bien qu'il soit possible d'employer de l'oxygène pur, de l'air enrichi en oxygène ou encore des mélanges, en proportions variées, d'oxygène et d'un ou plusieurs gaz inertes autres que l'azote.

Le préchauffage des réactifs et/ou l'utilisation d'air enrichi en oxygène ou même d'oxygène pur permettent, notamment, de traiter des gaz acides particulièrment pauvres en $H_2S$, en augmentant la température de combustion de ces gaz acides dans la deuxième zone de l'étage de réaction thermique.

L'invention concerne encore un réacteur thermique utilisable pour constituer l'étage de réaction thermique, dans lequel est mise en oeuvre l'étape de réaction thermique du procédé selon l'invention.

Ledit réacteur thermique est du type comportant une première chambre en matière réfractaire présentant une extrémité fermée pourvue d'un brûleur, par exemple brûleur axial, radial ou tangentiel, qui possède des moyens pour l'amenée d'un effluent combustible gazeux ou liquide et pour l'amenée, à débit réglable, d'un gaz renfermant de l'oxygène libre, et une extrémité munie d'une ouverture formant sortie, et une deuxième chambre en matière réfractaire située en aval de la première chambre, ladite deuxième chambre possédant une ouverture d'entrée, qui communique avec la sortie de la première chambre, et une ouverture formant sortie, cette deuxième chambre étant en outre munie d'un brûleur, par exemple brûleur radial ou tangentiel, qui possède des moyens d'amenée d'un deuxième courant de gaz acide et des moyens d'amenée, à débit réglable, de gaz renfermant de l'oxygène libre, et il se caractérise en ce qu'il comporte, d'une part, des moyens d'injection, par exemple injection radiale ou tangentielle, d'un premier courant de gaz acide dans la première chambre et, d'autre part, des moyens de régulation de débit agencés pour contrôler le rapport des débits desdits premier et deuxième courants de gaz acide en agissant sur le débit de l'un ou l'autre de ces courants.

Les moyens d'injection du premier courant de gaz acide dans la première chambre du réacteur thermique peuvent être connectés aux moyens d'amenée du deuxième courant de gaz acide dans la deuxième chambre dudit réacteur, de manière à ce que ledit premier courant de gaz acide constitue une première fraction d'un gaz acide unique, tandis que ledit deuxième courant de gaz acide forme la fraction restante du gaz acide unique.

Dans une forme de réalisation avantageuse, la première chambre du réacteur thermique est divisée en deux parties par un mur alvéolaire en matière réfractaire perpendiculaire à l'axe longitudinal de ladite chambre et disposé entre le brûleur et les moyens d'injection du premier courant de gaz acide dont est équipée cette chambre.

Le réacteur thermique peut encore comporter une troisième chambre en matière réfractaire, cette troisième chambre possédant une ouverture d'entrée, qui communique avec la sortie de la deuxième chambre par l'intermédiaire d'une cloison alvéolaire en matière réfractaire, et une ouverture, formant la sortie du réacteur thermique.

Les différentes chambres du réacteur thermique peuvent toutes être disposées à l'intérieur d'une même virole métallique.

La sortie de la deuxième chambre, pour un réacteur thermique à deux chambres, ou la sortie de la troisième chambre, lorsque le réacteur thermique possède trois chambres, constitue la sortie du réacteur thermique. Dans une installation mettant en oeuvre un procédé CLAUS de fabrication du soufre, cette sortie est généralement en communication avec l'entrée d'une chaudière de récupération thermique produisant de la vapeur par échange indirect de chaleur entre une circulation d'eau et les gaz chauds issus du réacteur thermique.

D'autres caractéristiques et avantages de l'invention apparaîtront à la lecture de la description ci-après d'une forme de mise en oeuvre de ladite invention donnée à titre illustratif et non limitatif en référence au dessin annexé sur lequel :

- la figure 1 donne un schéma de principe d'une installation pour la mise en oeuvre du procédé selon l'invention;
- la figure 2a représente schématiquement une coupe longitudinale d'un réacteur thermique utilisé dans l'installation de la figure 1, ladite coupe étant faite suivant un plan passant par l'axe du réacteur ; et
- la figure 2b est une coupe transversale schématique du réacteur thermique de la figure 2a, ladite coupe étant faite suivant un plan perpendiculaire à l'axe du réacteur et passant par les moyens d'injection du gaz acide dans la première chambre dudit réacteur.

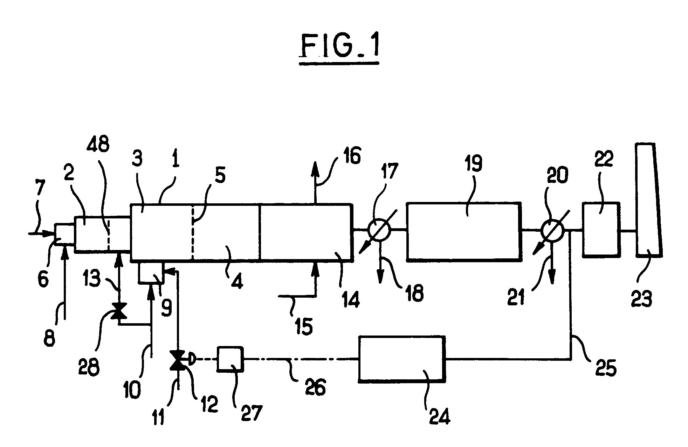

L'installation représentée sur la figure 1 comporte un réacteur thermique 1 comportant une première chambre 2 de réaction thermique, une deuxième chambre 3 de réaction thermique et une chambre 4 de résidence à température élevée, lesdites chambres étant sensiblement cylindriques et coaxiales ou non. Ces chambres, en matière réfractaire, sont disposées en série dans l'ordre précité et communiquent chacune avec la suivante, les deux premières par un orifice non représenté et les deux dernières par l'intermédiaire d'une cloison alvéolaire 5 en matière réfractaire. La première chambre de réaction thermique est équipée d'un brûleur axial 6 pourvu d'un conduit 7, pour l'amenée d'un effluent combustible liquide ou gazeux, et d'un conduit 8 pour l'amenée d'un gaz renfermant de l'oxygène libre. Un mur alvéolaire 48 transversal en matière réfractaire divise ladite première chambre en deux parties. La deuxième chambre de réaction thermique est équipée d'un brûleur radial 9 débouchant dans ladite chambre au voisinage de l'extrémité de cette chambre proche de la première chambre, ledit brûleur possédant un conduit 10 d'amenée d'un gaz acide et d'un conduit 11 d'amenée de gaz renfermant de l'oxygène libre, ce dernier conduit étant équipé d'une vanne 12 à ouverture réglable sous l'action d'un servomécanisme 27. Un conduit 13 équipé d'une vanne 28 à ouverture réglable est monté en dérivation sur le conduit 10 et débouche dans la première chambre 2 du réacteur thermique en aval du mur alvéolaire 48, pour amener dans ladite chambre une fraction du gaz acide unique passant dans le conduit 10, ladite fraction de gaz acide constituant un premier courant de gaz acide, tandis que la fraction restante arrivant au brûleur 9 forme un second courant de gaz acide.

La sortie du réacteur thermique, c'est-à-dire la sortie de la chambre 4 dudit réacteur, est connectée à une chaudière de récupération thermique 14 fonctionnant par échange indirect de chaleur et produisant de la vapeur à partir d'eau introduite par un conduit 15, la vapeur produite étant évacuée par un conduit 16. A la sortie de la chaudière de récupération thermique est disposé un condenseur 17 pour la séparation du soufre, ledit condenseur étant muni d'un conduit 18 pour l'évacuation du soufre liquide. La sortie du condenseur 17 est reliée à l'entrée d'un étage 19 de réaction catalytique. Ce dernier comporte habituellement deux ou trois convertisseurs catalytiques montés en série, chacun d'eux étant précédé d'un réchauffeur pour le mélange gazeux à traiter et étant suivi d'un condenseur pour la séparation du soufre. On a représenté en 20 le condenseur suivant le dernier convertisseur catalytique, ledit condenseur présentant un conduit 21 pour l'évacuation du soufre liquide. A la suite de ce condenseur est placé un incinérateur 22 qui est relié à une cheminée 23. Le cas échéant, un étage d'épuration complémentaire de tout type connu peut être intercalé entre le condenseur 20 et l'incinérateur 22. Des moyens 24 de régulation, du type de ceux connus dans l'art pour la régulation par contreréaction, sont utilisés pour effectuer l'analyse d'échantillons des gaz résiduaires sortant de l'étage 19 de réaction catalytique et refroidis dans le condenseur 20, pour déter-miner leurs teneurs en $H_2S$ et $SO_2$, lesdits échan-

tillons étant prélevés par une ligne d'échantillonnage 25, et, à partir des résultats de cette analyse, élaborer un signal 26 de commande du servomécanisme 27 qui règle l'ouverture de la vanne 12 pour ajuster le débit de gaz renfermant de l'oxygène libre amené au brûleur 9 par le conduit 11, de manière à maintenir le rapport molaire $H_2S:SO_2$, dans les gaz sortant de l'étage 19 de réaction catalytique, à la valeur choisie qui est généralement égale à 2:1. Le degré d'ouverture de la vanne 28 montée sur le conduit 13, dont dépend le débit de gaz acide dans ledit conduit 13 et par conséquent le rapport des débits des fractions de gaz acide issues du courant de gaz acide arrivant par le conduit 10 et injectées respectivement dans la chambre 2 et dans le brûleur 9, est ajusté par un proportionnomètre non représenté. L'ajustement du degré d'ouverture de la vanne 28 pourrait être également réalisé par un processus de régulation par contre-réaction tendant à maintenir la température de flamme du brûleur 9 à la valeur désirée.

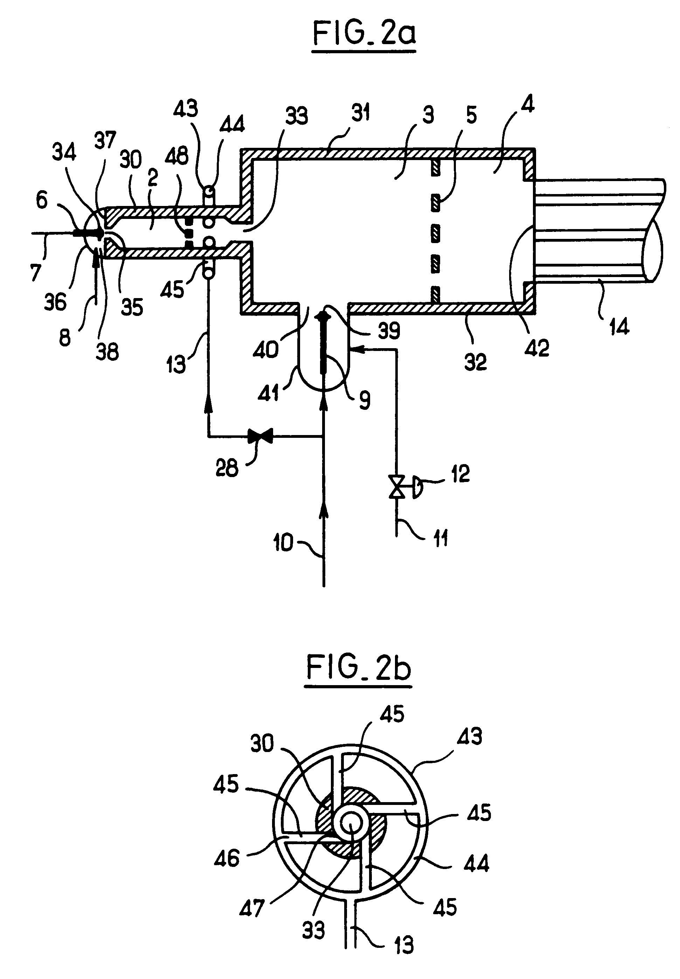

Le réacteur thermique, schématisé, en coupe longitudinale et en coupe transversale, respectivement sur les figures 2a et 2b, correspond avec quelques détails supplémentaires au réacteur thermique 1 schématisé sur la figure 1, les éléments correspondants étant affectés des mêmes références. On retrouve accolées en série la première chambre 2 et la deuxième chambre 3 de réaction thermique ainsi que la chambre 4 de résidence à température élevée, lesdites chambres étant délimitées par des parois réfractaires, respectivement 30 pour la chambre 2, 31 pour la chambre 3 et 32 pour la chambre 4. Les chambres 2 et 3 communiquent par un orifice 33, tandis que les chambres 3 et 4 communiquent par une cloison alvéolaire 5. A l'extrémité de la chambre 2 de réaction thermique la plus éloignée de la chambre 3 de réaction thermique est disposé un brûleur axial 6, comportant une tête de brûleur 34 et relié au conduit 7 d'amenée de l'effluent combustible gazeux ou liquide, ledit brûleur débouchant dans la chambre 2 par un orifice 35 pratiqué dans la paroi réfractaire de ladite chambre 2. Un carter 36 entoure le brûleur 6 et délimite, avec l'extrémité 37 de la chambre 2, un espace 38 dans lequel débouche le conduit 8 d'amenée du gaz renfermant de l'oxygène libre. Un mur alvéolaire 48 transversal divise la chambre 2 en deux parties. Un brûleur radial 9 est monté dans la paroi 31 de la chambre 3 de telle sorte que la tête 39 de ce brûleur, qui est relié au conduit 10 d'amenée de gaz acide, débouche dans un canal 40 pratiqué dans ladite paroi 31 et s'ouvrant dans la chambre 3 de réaction thermique suivant une direction radiale. Le brûleur 9 est entouré d'un carter 41 dans lequel débouche le conduit 11 d'amenée de gaz renfermant de l'oxygène libre pourvu de la vanne 12 à ouverture réglable.

L'extrémité ouverte 42 du réacteur thermique, qui est en même temps la sortie de la chambre 4 de résidence des gaz à température élevée, est reliée à la chaudière 14 de récupération thermique de l'installation CLAUS, ladite chaudière étant accolée à la chambre 4.

Un système 43 d'injection de gaz acide dans la chambre 2 est prévu à un niveau de cette chambre en aval du mur alvéolaire et proche de la chambre 3, ledit système étant relié au conduit 13 monté en dérivation sur le conduit 10. Ce système 43 peut être de tout type connu permettant de réaliser un parfait mélangeage du gaz acide injecté dans la chambre 2 et des fumées de combustion produites par le brûleur 6 dans ladite chambre. Ledit système 43 peut, par exemple, comporter une couronne tubulaire 44, entourant ladite chambre 2 et reliée au conduit 13 monté en dérivation sur le conduit 10, et une pluralité d'éléments tubulaires 45, représentés ici au nombre de quatre, dont chacun est connecté par une extrémité 46 à la couronne 44 et traverse la paroi 30 de la chambre 2 pour déboucher dans ladite chambre par son autre extrémité 47 tangentiellement ou non a la paroi de cette chambre.

Le procédé selon l'invention est mis en oeuvre comme suit :

L'effluent combustible gazeux ou liquide est amené au brûleur 6 par le conduit 7, tandis que la quantité appropriée de gaz renfermant de l'oxygène libre, qui est en excès par rapport à la quantité théorique pour une combustion complète de l'effluent combustible, est amenée par le conduit 8. Le mélange combustible ainsi formé est brûlé et les gaz ou fumées résultant de cette combustion, réalisée dans des conditions oxydantes, rencontrent un premier courant de gaz acide consistant en la fraction de gaz acide dérivée du courant de gaz acide 10 par le conduit 13 et injectée dans la chambre 2 par le système d'injection 43. Au contact des fumées oxydantes de la combustion, une partie de l'$H_2S$ de ladite fraction de gaz acide est oxydée en $SO_2$ et soufre et les traces d'hydrocarbures que peut contenir ladite fraction sont totalement détruites, ce qui consomme la quasi totalité de l'oxygène présent dans lesdites fumées. Les produits gazeux résultant de la mise en contact précitée dans la chambre 2 (première chambre de réaction thermique) passent dans la chambre 3 (deuxième chambre de réaction thermique) en traversant l'orifice 33, dont la géométrie est choisie pour favoriser l'homogénéisation desdits produits, de manière à permettre la consommation de l'oxygène qu'ils renferment. Un second courant de gaz acide formé de la fraction du courant de gaz acide, qui passe dans le conduit 10 et n'est pas dérivée par le conduit 13, est amenée au brûleur 9, tandis que la quantité requise de gaz renfermant de l'oxygène libre, correspondant à l'obtention d'un rapport molaire $H_2S:SO_2$ ayant la valeur choisie, généralement égale ou voisine de 2:1, dans les gaz issus de l'étape de réaction catalytique, est amenée par le conduit 11, avec un débit contrôlé, dans le canal 40. Le mélange combustible ainsi réalisé brûle avec une température de combustion supérieure à 850°C et plus particulièrement supérieure à 920°C, cette température étant appropriée pour l'obtention d'une flamme stable à la sortie du brûleur 9 et pour réaliser une combustion complète des traces d'hydrocarbures présentes éventuellement dans le courant de gaz acide alimentant le brûleur 9. Les gaz de combustion produits par le brûleur 9 se mélangent, dans la chambre 3 de réaction thermique, aux produits gazeux issus de la chambre 2 pour former un mélange gazeux renfermant $H_2S$, $SO_2$ et du soufre vapeur, ledit mélange gazeux étant réducteur. Ceci permet, lorsque l'effluent combustible, dont on réalise la combustion en excès de gaz renfermant de l'oxygène libre dans la zone 2 de réaction thermique, renferme des composés soufrés et de l'ammoniac ou des composés azotés tels que HCN, une réduction totale des oxydes d'azote et du $SO_3$ qui auraient pu se former lors de la combustion de l'effluent combustible. Le mélange gaseux produit dans la chambre 3 de réaction thermique traverse la cloison alvéolaire réfractaire 5, ce qui améliore encore la qualité de ce mélange, et séjourne encore dans la chambre 4 de résidence à température élevée, dans laquelle la température est encore supérieure à 900°C. Le flux gazeux renfermant $H_2S$, $SO_2$ et du soufre vapeur sortant du réacteur thermique, par la sortie 42 de ce dernier, subit un premier refroidissement dans la chaudière de récupération thermique 14, puis est refroidi plus fortement ensuite dans le condenseur 17, dans lequel une partie du soufre contenu dans ledit flux gazeux se condense et peut être évacuée par le conduit 18.

Le flux gazeux issu du condenseur 17 passe ensuite, après avoir été réchauffé, dans l'étage 19 de conversion catalytique pour convertir en soufre les quantités d'$H_2S$ et de $SO_2$ qu'il contient encore. Les gaz issus de l'étage de conversion catalytique passent dans le condenseur 20 pour en séparer le soufre, puis dans l'incinérateur 22 pour transformer en $SO_2$ les dernières traces de composés sulfurés avant d'être rejetés à l'atmosphère par la cheminée 23. Le rapport molaire $H_2S:SO_2$ à la sortie de l'étage de conversion catalytique est maintenu à la valeur choisie, généralement 2:1, par action des moyens de régulation 24 commandant le servomécanisme 27 qui ajuste le degré d'ouverture de la vanne 12 montée sur le conduit 11 d'amenée de gaz renfermant de l'oxygène libre au brûleur 9.

On pourrait encore maintenir ledit rapport molaire $H_2S:SO_2$ à la valeur choisie, en amenant au brûleur 9, par un conduit non représenté, un débit principal de gaz renfermant de l'oxygène libre proportionnel au débit de gaz acide introduit dans ledit brûleur 9, en introduisant par le conduit 11 un débit additionnel plus faible de gaz renfermant de l'oxygène libre et en contrôlant ledit débit additionnel par ajustement du degré d'ouverture de la vanne 12, montée sur le conduit 11, par action du servomécanisme 27 commandé par les moyens de régulation 24.

Pour compléter la description de l'invention qui vient d'être fournie, on donne ci-après trois exemples concrets de mise en oeuvre du procédé selon l'invention.

## EXEMPLE 1 :

On effectuait des essais de production de soufre en traitant simultanément selon l'invention un gaz acide pauvre en $H_2S$ et un effluent gazeux combustible consistant en un gaz de chauffage.

Le gaz acide renfermait, en volume, 25% d'$H_2S$, 70,3% de $CO_2$, 4% d'$H_2O$, 0,4% de $CH_4$, 0,2% de $C_2H_6$ et 0,1% de benzène, tandis que le gaz de chauffage renfermait, en volume, 71,6% de méthane, 10% d'éthane, 4,6% d'alcanes en $C_3$ et plus, 0,5% de CO, 0,5% d'$H_2$, 2,7% d'azote, 6,7% de $C_2H_4$, 1,8% de $CH_3SH$, 1% d'$H_2S$ et 0,6% de $CO_2$. On opérait dans une installation pilote analogue à celle décrite en se référant aux figures 1, 2a et 2b, c'est-à-dire utilisant un réacteur thermique comportant deux chambres de réaction thermique et une chambre de résidence des gaz a température élevée. Le gaz renfermant de l'oxygène libre, utilisé pour réaliser la combustion de l'effluent combustible gazeux et d'une fraction du gaz acide, était de l'air.

L'effluent combustible gazeux, c'est-à-dire le gaz de chauffage, et l'air de combustion associé étaient amenés au brûleur de la première chambre de réaction thermique (chambre 2) avec des débits égaux respectivement à 38,4 kilomoles/heure et 682 kilomoles/heure et des températures respectivement égales à 58°C et 100°C. La température dans la première chambre de réaction thermique au voisinage du brûleur 6 avait une valeur d'environ 1500°C

La combustion du gaz de chauffage dans la première chambre de réaction thermique produisait 723,7 kilomoles/heure de fumées oxydantes renfermant, en volume, 73% d'azote, 13% d'$H_2O$, 7,3% d'oxygène, 6,6% de $CO_2$ et 0,1% de $SO_2$ et possédant une température de 1500°C.

Le gaz acide, arrivant par le conduit 10 avec une température de 200°C et un débit égal à 1200 kilomoles/heure, était divisé, par ouverture appropriée de la vanne 28 contrôlée par un proportionnomètre, en une première fraction ayant un débit de 707,8 kilomoles/heure passant dans le conduit 13 et en une seconde fraction ayant un débit égal à 492,2 kilomoles/heure servant à alimenter le brûleur 9.

Ladite première fraction de gaz acide était injectée, par le système d'injection 43, dans la première chambre de réaction thermique et se mélangeait aux fumées oxydantes produites dans ladite chambre par la combustion du gaz de chauffage réalisée en excès d'air.

Les produits gazeux résultant de ce mélange passaient alors, par l'orifice 33, dans la deuxième chambre de réaction thermique, lesdits produits ayant une température de 958°C et renfermant, en volume, 4% d'$H_2S$, 0,8% de $SO_2$, 3,5% de soufre vapeur, 36,2% d'azote, 34,5% de $CO_2$, 16,4% d'$H_2O$, 3,2% de CO, 1% d'$H_2$ et 0,4% de COS et $CS_2$.

La seconde fraction de gaz acide était amenée au brûleur 9 de la deuxième chambre de réaction thermique (chambre 3), ledit brûleur recevant également 401 kilomoles/heure d'air préchauffé à 200°C, cette quantité d'air conduisant à l'obtention d'un rapport molaire $H_2S:SO_2$ égal à 2:1 dans les gaz issus de l'étage 19 de réaction catalytique. Le brûleur 9 produisait 887 kilomoles/heure de gaz de combustion ayant une température de 925°C, lesdits gaz de combustion étant exempts d'hydrocarbures et renfermant, en volume, 4% de soufre vapeur, 2,2% d'$H_2S$, 3,4% de $SO_2$, 38,1% de $CO_2$, 35% d'azote, 15,3% d'$H_2O$, 1,4% de CO, 0,4% d'$H_2$ et 0,2% de COS et $CS_2$.

Les gaz de combustion de la seconde fraction de gaz acide produits par le brûleur 9 se mélangeaient, dans la deuxième chambre de réaction thermique, aux produits gazeux arrivant dans ladite chambre par l'orifice 33 en provenance de la première chambre de réaction thermique. Le mélange gazeux résultant, dont la température était égale à 950°C, passait, par la cloison alvéolaire 5, dans la chambre 4 de résidence des gaz et conservait sensiblement ladite température en séjournant dans cette chambre. Ledit mélange gazeux renfermait, en volume, 3,9% de soufre vapeur, 3,2% d'$H_2S$, 1,6% de $SO_2$, 36% de $CO_2$, 35,8% d'azote, 16,1% d'$H_2O$, 2,4% de CO, 0,7% d'$H_2$ et 0,3% de COS et $CS_2$.

Par la sortie 42 du réacteur thermique on évacuait un flux gazeux exempt d'hydrocarbures ayant la température et la composition dudit mélange gazeux, que l'on faisait passer dans la chaudière 14 de récupération thermique avec un débit de 2344 kilomoles/heure.

## EXEMPLE 2 :

En opérant dans une installation analogue à celle utilisée pour l'exemple 1, on effectuait des essais de production de soufre en traitant simultanément selon l'invention un gaz acide renfermant de l'$H_2S$ et un effluent combustible liquide constitué de disulfures.

Le gaz acide renfermait, en volume, 35,3% d'$H_2S$, 56,5% de $CO_2$, 7,2% d'$H_2O$, 0,9% de $CH_4$ et 0,1% de $CH_3SH$, tandis que l'effluent combustible liquide consistait en un mélange renfermant, en pourcentage molaire, 27% de disulfure de diméthyle et 73% de disulfure de diéthyle.

L'effluent combustible liquide et l'air de combustion associé étaient amenés au brûleur de la première chambre de réaction thermique avec des débits égaux respectivement à 9,6 kilomoles/heure et 529,5 kilomoles/heure et des températures respectivement égales à 38°C et 100°C.

La température dans la première chambre de réaction thermique au voisinage du brûleur 6 avait une valeur d'environ 1540°C. La combustion de l'effluent combustible liquide dans la première chambre de réaction thermique produisait 550 kilomoles/heure de fumées oxydantes renfermant, en volume, 74,3% d'azote, 9,7% d'eau, 6,5% d'oxygène, 6% de $CO_2$ et 3,5% de $SO_2$.

Le gaz acide, arrivant par le conduit 10 avec une température de 200°C et un débit égal à 982 kilomoles/heure, était divisé, par ouverture appropriée de la vanne 28 du conduit 13 contrôlée par un proportionnomètre, en une première fraction ayant un débit de 393,2 kilomoles/heure passant dans ledit conduit 13 et en une seconde fraction ayant un débit égal à 588,8 kilomoles/heure servant à alimenter le brûleur 9 dont est pourvue la deuxième chambre de réaction thermique.

Ladite première fraction de gaz acide était injectée, par le système d'injection 43, dans la première chambre de réaction thermique et se mélangeait aux fumées oxydantes produites dans ladite chambre par la combustion de l'effluent combustible liquide réalisée en excès d'air, ce qui conduisait à une destruction complète des traces d'hydrocarbure, à savoir $CH_4$, présentes dans ladite première fraction de gaz acide.

Les produits gazeux résultant de ce mélange passaient alors, par l'orifice 33, dans la deuxième chambre de réaction thermique, lesdits produits ayant une température de 1073°C et renfermant, en volume, 5,3% de soufre vapeur, 3,5% d'$H_2S$, 2% de $SO_2$, 42,3% d'azote, 23% de $CO_2$, 18,6% d'$H_2O$, 3,6% de CO, 1,5% d'$H_2$ et 0,2% de COS et $CS_2$.

La seconde fraction de gaz acide était amenée au brûleur 9 de la deuxième chambre de réaction thermique, ledit brûleur recevant également 490 kilomoles/heure d'air préchauffé à 200°C, cette quantité d'air conduisant à l'obtention d'un rapport molaire $H_2S$:$SO_2$ égal à 2:1 dans les gaz issus de l'étage 19 de réaction catalytique. Le brûleur 9 produisait des gaz de combustion ayant une température de 925°C avec un débit de 1078 kilomoles/heure, lesdits gaz de combustion étant exempts d'hydrocarbures et renfermant, en volume, 6% de soufre vapeur, 4,8% d'$H_2S$, 2,2% de $SO_2$, 35,1% d'azote, 29,7% de $CO_2$, 19,7% d'$H_2O$, 1,5% de CO, 0,7% d'$H_2$ et 0,3% de COS et $CS_2$.

Les gaz de combustion de la seconde fraction de gaz acide produits par le brûleur 9 se mélangeaient, dans la deuxième chambre de réaction thermique, aux produits gazeux arrivant dans ladite chambre par l'orifice 33 en provenance de la première chambre de réaction thermique. Le mélange gazeux résultant, dont la température était égale à 996°C, passait, par la cloison alvéolaire 5, dans la chambre 4 de résidence des gaz et conservait ladite température en séjournant dans cette chambre. Ledit mélange gazeux renfermait en volume, 5,7% de soufre vapeur, 4,2% d'$H_2S$, 2,1% de $SO_2$, 38,4% d'azote, 26,6% de $CO_2$, 19,3% d'$H_2O$, 2,4% de CO, 1% d'$H_2$ et 0,3% de COS et $CS_2$.

Par la sortie 42 du réacteur thermique on évacuait, avec un débit de 2046 kilomoles/heure, un flux gazeux exempt d'hydrocarbures et de $SO_3$ ayant la température et la composition du mélange gazeux ci-dessus, que l'on faisait passer dans la chaudière 14 de récupération thermique.

## EXEMPLE 3 :

En opérant dans une installation analogue à celle utilisée pour l'exemple 1, on effectuait des essais de production de soufre en traitant simultanément selon l'invention un gaz acide renfermant de l'$H_2S$ et un effluent combustible gazeux contenant de l'ammoniac, ledit effluent résultant du traitement d'eaux acides de raffineries.

Le gaz acide renfermait, en volume, 90% d'$H_2S$, 5,4% de $CO_2$, 4% d'$H_2O$ et 0,6% de $CH_4$, tandis que l'effluent combustible gazeux consistait en un mélange renfermant, en pourcentage molaire, 35% d'$H_2S$, 35% de $NH_3$ et 30% d'$H_2O$.

L'effluent combustible gazeux et l'air de combustion associé étaient amenés au brûleur de la première chambre de réaction thermique avec des débits égaux respectivement à 50,3 kilomoles/heure et 244,6 kilomoles/heure et des températures respectivement égales à 80°C et 100°C.

La température dans la première chambre de réaction thermique au voisinage du brûleur 6 avait une valeur de 1500°C. La combustion de l'effluent combustible gazeux dans la première chambre de réaction thermique produisait 290,5 kilomoles/heure de fumées oxydantes renfermant, en volume, 68,1% d'azote, 22% d'$H_2O$, 6,1% de $SO_2$ et 3,8% d'oxygène.

Le gaz acide, arrivant par le conduit 10 avec une température de 50°C et un débit égal à 100 kilomoles/heure, était divisé, par ouverture appropriée de la vanne 28 du conduit 13 contrôlée par un proportionnomètre, en une première fraction ayant un débit de 67 kilomoles/heure passant dans ledit conduit 13 et en une seconde fraction ayant un débit égal à 33 kilomoles/heure servant à alimenter le brûleur 9 dont est pourvue la deuxième chambre de réaction thermique.

Ladite première fraction de gaz acide était injectée, par le système d'injection 43, dans la première chambre de réaction thermique et se mélangeait aux fumées oxydantes produites dans ladite chambre par la combustion de l'effluent combustible gazeux réalisée en excès d'air, ce qui conduisait à une destruction complète des traces d'hydrocarbure, à savoir $CH_4$, présentes dans ladite première fraction de gaz acide.

Les produits gazeux résultant de ce mélange passaient alors, par l'orifice 33, dans la deuxième chambre de réaction thermique, lesdits produits ayant une température de 1326°C et renfermant, en volume, 6,9% de soufre vapeur, 3,6% d'$H_2S$, 3,6% de $SO_2$, 53,7% d'azote, 26,5% d'$H_2O$, 4,6% d'$H_2$, 0,7% de $CO_2$ et 0,4% de CO.

La seconde fraction de gaz acide était amenée au brûleur 9 de la deuxième chambre de réaction thermique, ledit brûleur recevant également 34 kilomoles/heure d'air préchauffé à 100°C, cette quantité d'air conduisant à l'obtention d'un rapport molaire $H_2S:SO_2$ égal à 2:1 dans les gaz issus de l'étage 19 de réaction catalytique. Le brûleur 9, dont la température de flamme était de 929°C, produisait 67,8 kilomoles/heure de gaz de combustion, lesdits gaz étant exempts d'hydrocarbures et renfermant, en volume, 10,7% de soufre vapeur, 22% d'$H_2S$, 0,3% de $SO_2$, 38,8% d'azote, 22,8% d'$H_2O$, 2,5% d'$H_2$, 2,5% de $CO_2$ et 0,4% de CO.

Les gaz de combustion de la seconde fraction de gaz acide produits par le brûleur 9 se mélangeaient, dans la deuxième chambre de réaction thermique, aux produits gazeux arrivant dans ladite chambre par l'orifice 33 en provenance de la première chambre de réaction thermique. Le mélange gazeux résultant, dont la température était égale à 1253°C, passait, par la cloison alvéolaire 5, dans la chambre 4 de résidence des gaz et conservait ladite température en séjournant dans cette chambre.

Ledit mélange gazeux renfermait, en volume, 8,4% de soufre vapeur, 5,2% d'$H_2S$, 2,6% de $SO_2$, 51,2% d'azote, 26,9% d'$H_2O$, 4,4% d'$H_2$, 0,9% de $CO_2$ et 0,4% de CO.

Par la sortie 42 du réacteur thermique on évacuait, avec un débit de 438 kilomoles/heure, un flux gazeux exempt d'hydrocarbures, de $SO_3$ et d'oxydes d'azote et possédant la température et la composition du mélange gazeux ci-dessus, que l'on faisait passer dans la chaudière 14 de récupération thermique.

## Revendications

1. Procédé de production de soufre à partir d'au moins un gaz acide renfermant de l'$H_2S$ et d'un effluent combustible gazeux ou liquide, du type comportant une étape de réaction thermique, mise en oeuvre dans un étage de réaction thermique et consistant à réaliser une oxydation ménagée de l'$H_2S$ du gaz acide et une combustion complète de l'effluent combustible pour produire un flux gazeux renfermant $H_2S$, $SO_2$ et du soufre vapeur, puis une étape de refroidissement indirect dudit flux gazeux pour en séparer le soufre par condensation et ensuite une étape de réaction catalytique mise en oeuvre sur le flux gazeux issu de l'étape de refroidissement, ledit procédé se caractérisant en ce que l'on conduit l'étape de réaction thermique en effectuant la combustion de l'effluent combustible gazeux ou liquide dans une première zone de l'étage de réaction thermique avec une quantité d'un gaz renfermant de l'oxygène libre en excès par rapport à la quantité théorique nécessaire pour une combustion complète de l'effluent combustible, ledit excès étant inférieur à la proportion théorique de gaz renfermant de l'oxygène libre nécessaire pour oxyder en $SO_2$ environ un tiers de l'$H_2S$ du débit global de gaz acide à traiter, en injectant un premier courant de gaz acide dans les fumées de combustion de l'effluent combustible présentes dans ladite première zone de l'étage de réaction thermique, en brûlant incomplètement un deuxième courant de gaz acide dans une deuxième zone de l'étage de réaction thermique, qui reçoit les produits gazeux de la première zone, avec une quantité contrôlée de gaz renfermant de l'oxygène libre telle que le rapport molaire $H_2S:SO_2$ dans les gaz issus de l'étape de réaction catalytique ait une valeur prédéterminée, et en ajustant les débits des premier et deuxième courants de gaz acide de telle sorte que la température obtenue lors de la combustion incomplète du deuxième courant de gaz acide dans la deuxième zone de l'étage de réaction thermique ait une valeur supérieure à 850°C.

2. Procédé selon la revendication 1, caractérisé en ce que l'ajustement des débits des premier et deuxième courants de gaz acide est tel que la température obtenue lors de la combustion incomplète du deuxième courant de gaz acide dans la deuxième zone de l'étage de réaction thermique ait une valeur supérieure à 920°C.

3. Procédé selon la revendication 1 ou 2 caractérisé en ce que la valeur prédéterminée du rapport molaire $H_2S:SO_2$ dans les gaz issus de l'étape de réaction catalytique est égale à environ 2:1.

4. Procédé selon l'une des revendications 1 à 3, caractérisé en ce que le flux gazeux issu de la deuxième zone de l'étage de réaction thermique traverse une zone de résidence des gaz, dans laquelle ledit flux gazeux est maintenu à une température égale à sa température de sortie de ladite deuxième zone ou voisine de ladite température de sortie.

5. Procédé selon l'une des revendications 1 à 4, caractérisé en ce que le premier courant ou/et le deuxième courant de gaz acide renferment des hydrocarbures en concentration globale comprise, en volume, entre 0,2 et 10% et plus particulièrement entre 0,5 et 5%.

6. Procédé selon l'une des revendications 1 à 5, caractérisé en ce que les premier et deuxième courants de gaz acide consistent en deux gaz acides distincts ayant des teneurs en $H_2S$ identiques ou différentes.

7. Procédé selon la revendication 6, caractérisé en ce que le premier courant de gaz acide a une teneur en $H_2S$ inférieure à celle du deuxième courant de gaz acide.

8. Procédé selon l'une des revendications 1 à 5, caractérisé en ce que les premier et deuxième courants de gaz acide consistent, respectivement, en une première fraction d'un gaz acide unique et en la fraction restante de ce gaz acide unique.

9. Procédé selon l'une des revendications 3 à 8, caractérisé en ce que l'effluent combustible est un effluent résiduaire gazeux ou liquide, qui renferme des composés soufrés oxydables en $SO_2$, et éventuellement de l'ammoniac ou des composés azotés tels que HCN, tandis qu'au moins le deuxième courant de gaz acide a une teneur en $H_2S$ supérieure à 15% en volume, en ce que le débit de l'effluent combustible et le débit global des premier et deuxième courants de gaz acide sont tels que le débit molaire X du $SO_2$ formé lors de la combustion de l'effluent combustible soit inférieur à la moitié du débit total molaire Y de l'$H_2S$ amené par lesdits courants de gaz acide et en ce que l'excès de gaz renfermant de l'oxygène libre par rapport à la quantité théorique nécessaire pour une combustion complète de l'effluent combustible correspond à un débit molaire d'oxygène inférieur à

$$\frac{(Y-2X)}{2}.$$

10. Procédé selon l'une des revendications 1 à 8, caractérisé en ce que l'effluent combustible consiste en un gaz de chauffage, tandis que les premier et deuxième courants de gaz acide ont une teneur en $H_2S$ inférieure à 35% en volume.

11. Réacteur thermique pour réaliser une oxydation ménagée de l'$H_2S$ d'au moins un gaz acide en contenant et simultanément une combustion complète d'un effluent combustible gazeux ou liquide afin de produire un flux gazeux renfermant $H_2S$, $SO_2$ et du soufre vapeur, du type comportant une première chambre (2) en matière réfractaire présentant une extrémité fermée pourvue d'un brûleur (6), qui possède des moyens (7) pour l'amenée d'un effluent combustible gazeux ou liquide et des moyens (8) pour l'amenée, à débit réglable, d'un gaz renfermant de l'oxygène libre, et une extrémité munie d'une ouverture (33) formant sortie, et une deuxième chambre (3) en matière réfractaire située en aval de la première chambre, ladite deuxième chambre possédant une ouverture d'entrée, qui communique avec la sortie (33) de la première chambre, et une ouverture formant sortie, cette deuxième chambre étant en outre munie d'un brûleur (9), qui possède des moyens (10) d'amenée d'un deuxième courant de gaz acide et des moyens (11) d'amenée, à débit réglable (12), de gaz renfermant de l'oxygène libre, ledit réacteur se caractérisant en ce qu'il comporte, d'une part, des moyens (43) d'injection d'un premier courant de gaz acide dans la première chambre (2) et, d'autre part, des moyens (28) de régulation de débit agencés pour contrôler le rapport des débits desdits premier et deuxième courants de gaz acide en agissant sur le débit de l'un ou l'autre de ces courants.

12. Réacteur selon la revendication 11, caractérisé en ce qu'il comporte encore une troisième chambre (4) en matière réfractaire, cette troisième chambre possédant une ouverture d'entrée, qui communique avec la sortie de la deuxième chambre par l'intermédiaire d'une cloison alvéolaire (5) en matière réfractaire, et une ouverture (42) formant la sortie du réacteur thermique.

**13.** Réacteur selon la revendication 11 ou 12, caractérisé en ce que les moyens (43) d'injection du premier courant de gaz acide dans la première chambre (2) sont connectés par un conduit (13) aux moyens (10) d'amenée du deuxième courant de gaz acide, dont est pourvu le brûleur (9) de la deuxième chambre (3), de manière que ledit premier courant de gaz acide constitue une première fraction d'un gaz acide unique, tandis que ledit deuxième courant forme la fraction restante du gaz acide unique.

**14.** Réacteur selon la revendication 13, caractérisé en ce que les moyens de régulation des débits des premier et deuxième courants de gaz acide comportent une vanne a degré d'ouverture réglable montée sur ledit conduit (13) connectant les moyens (43) d'injection du premier courant de gaz acide dans la première chambre (2) aux moyens (10) d'amenée du deuxième courant de gaz acide dont est pourvu le brûleur (9) de la deuxième chambre (3).

**15.** Réacteur selon la revendication 13 ou 14, caractérisé en ce que les moyens (43) d'injection du premier courant de gaz acide dans la première chambre (2) sont des moyens d'injection comportant, d'une part, une couronne tubulaire (44), qui entoure ladite première chambre (2) et est reliée au conduit (13) connectant lesdits moyens d'injection aux moyens (10) d'amenée du deuxième courant de gaz acide dont est pourvu le brûleur (9) de la deuxième chambre (3) et, d'autre part, une pluralité d'éléments tubulaires (45), dont chacun est connecté par une extrémité (46) à la couronne tubulaire (44) et traverse la paroi (30) de la première chambre (2) pour déboucher dans ladite première chambre par son autre extrémité (47).

**16.** Réacteur selon l'une des revendications 11 à 15, caractérisé en ce que la première chambre (2) du réacteur thermique est divisée en deux parties par un mur alvéolaire (48) en matière réfractaire perpendiculaire à l'axe longitudinal de ladite chambre et disposé entre le brûleur (6) et les moyens (43) d'injection du premier courant de gaz acide dont est équipée cette chambre.

**Claims**

**1.** Process for producing sulphur from at least one acid gas containing $H_2S$ and from a gaseous or liquid combustible effluent, of the type comprising a thermal reaction step carried out in a thermal reaction stage and consisting in effecting controlled oxidation of the $H_2S$ of the acid gas and complete combustion of the combustible effluent in order to produce a stream of gas containing $H_2S$, $SO_2$ and sulphur in vapour form, then a step for the indirect cooling of the stream of gas in order to separate the sulphur by condensation and then a catalytic reaction step carried out on the stream of gas resulting from the cooling step, the process being characterised in that the thermal reaction step is carried out by effecting the combustion of the gaseous or liquid combustible effluent in a first area of the thermal reaction stage with an amount of gas containing free oxygen in excess in relation to the theoretical amount necessary for complete combustion of the combustible effluent, the excess being less than the theoretical proportion of free-oxygen-containing gas necessary to oxidise to $SO_2$ approximately one third of the $H_2S$ in the overall amount of acid gas to be treated, by injecting a first current of acid gas into the combustion fumes of the combustible effluent which are present in the first area of the thermal reaction stage, by burning incompletely a second current of acid gas in a second area of the thermal reaction stage, which receives the gaseous products of the first area, with a controlled amount of gas containing free oxygen such that the molar ratio $H_2S:SO_2$ in the gases resulting from the catalytic reaction step has a predetermined value, and by adjusting the rates of flow of the first and second acid gas currents in such a manner that the temperature obtained during the incomplete combustion of the second acid gas current in the second area of the thermal reaction stage has a value greater than 850°C.

**2.** Process according to Claim 1, characterised in that the adjustment of the rates of flow of the first and second acid gas currents is such that the temperature obtained during the incomplete combustion of the second acid gas current in the second area of the thermal reaction stage has a value greater than 920°C.

**3.** Process according to Claim 1 or 2, characterised in that the predetermined value of the molar ratio $H_2S:SO_2$ in the gases resulting from the catalytic reaction step is approximately 2:1.

**4.** Process according to any one of Claims 1 to 3, characterised in that the stream of gas leaving the second area of the thermal reaction stage passes through a gas residence area in which the stream of gas is maintained at a temperature equal to its output temperature from the second area or approximately equal to the output temperature.

5. Process according to any one of Claims 1 to 4, characterised in that the first and/or second acid gas current contains hydrocarbons in a total concentration of, by volume, between 0.2 and 10% and more especially between 0.5 and 5%.

6. Process according to any one of Claims 1 to 5, characterised in that the first and second acid gas currents comprise two distinct acid gases having identical or different $H_2S$ contents.

7. Process according to Claim 6, characterised in that the first acid gas current has a content of $H_2S$ which is less than that of the second acid gas current.

8. Process according to any one of Claims 1 to 5, characterised in that the first and second acid gas currents comprise, respectively, a first fraction of a single acid gas and the remaining fraction of that single acid gas.

9. Process according to any one of Claims 3 to 8, characterised in that the combustible effluent is a gaseous or liquid residual effluent which contains sulphur compounds that can be oxidised to $SO_2$, and optionally ammonia or nitrogen compounds such as HCN, whilst at least the second acid gas current has a content of $H_2S$ greater than 15% by volume, in that the rate of flow of the combustible effluent and the overall rate of flow of the first and second acid gas currents are such that the molar flow X of $SO_2$ formed during the combustion of the combustible effluent is lower than half the total molar flow Y of the $H_2S$ supplied by the acid gas currents and in that the excess gas containing free oxygen in relation to the theoretical amount necessary for complete combustion of the combustible effluent corresponds to a molar flow of oxygen of less than

$$\frac{(Y-2X)}{2}.$$

10. Process according to any one of Claims 1 to 8, characterised in that the combustible effluent comprises a heating gas whilst the first and second acid gas currents have a content of $H_2S$ of less than 35% by volume.

11. Thermal reactor for carrying out controlled oxidation of the $H_2S$ of at least one acid gas containing $H_2S$ and simultaneously complete combustion of a gaseous or liquid combustible effluent in order to produce a stream of gas containing $H_2S$, $SO_2$ and sulphur in vapour form, of the type comprising a first chamber (2) manufactured from refractory material and having a closed end provided with a burner (6) which has means (7) for supplying a gaseous or liquid combustible effluent and means (8) for supplying, at a controllable rate, a gas containing free oxygen, and an end provided with an opening (33) acting as an outlet, and a second chamber (3) manufactured from refractory material and disposed downstream of the first chamber, the second chamber having an inlet opening which communicates with the outlet (33) of the first chamber, and an opening acting as an outlet, the second chamber also being provided with a burner (9) which has means (10) for supplying a second acid gas current and means (11) for supplying, at a controllable rate (12), gas containing free oxygen, the reactor being characterised in that it comprises, on the one hand, means (43) for injecting a first acid gas current into the first chamber (2) and, on the other hand, flow-regulating means (28) designed to control the ratio of the flows of the first and second acid gas currents by influencing the rate of flow of one or other of those currents.

12. Reactor according to Claim 11, characterised in that it also comprises a third chamber (4) manufactured from refractory material, this third chamber having an inlet opening which communicates with the outlet of the second chamber by way of an alveolar partition (5) manufactured from refractory material, and an opening (42) acting as the outlet of the thermal reactor.

13. Reactor according to Claim 11 or 12, characterised in that the means (43) for injecting the first acid gas current into the first chamber (2) are connected by a pipe (13) to the means (10) for supplying the second acid gas current, with which the burner (9) of the second chamber (3) is provided, in such a manner that the first acid gas current constitutes a first fraction of a single acid gas whilst the second current forms the remaining fraction of the single acid gas.

14. Reactor according to Claim 13, characterised in that the means for regulating the flow of the first and second acid gas currents comprise a valve of which the degree of opening can be regulated and which is mounted on the pipe (13) connecting the means (43) for injecting the first acid gas current into the first chamber (2) to the means (10) for supplying the second acid gas current, with which the burner (9) of the second chamber (3) is provided.

15. Reactor according to Claim 13 or 14, characterised in that the means (43) for injecting the first acid gas current into the first chamber (2) are injection means comprising, on the one hand, a tubular collar (44) which surrounds the first chamber (2) and is connected to the pipe (13) connecting the injection means to the means (10) for supplying the second acid gas current, with which the burner (9) of the second chamber (3) is provided, and, on the other hand, a plurality of tubular elements (45) each of which is connected by one end (46) to the tubular collar (44) and, at its other end (47), passes through the wall (30) of the first chamber (2) to open out in that first chamber.

16. Reactor according to any one of Claims 11 to 15, characterised in that the first chamber (2) of the thermal reactor is divided into two portions by an alveolar wall (48) which is manufactured from a refractory material and is perpendicular to the longitudinal axis of the chamber and is arranged between the burner (6) and the means (43) for injecting the first acid gas current with which this chamber is equipped.

**Patentansprüche**

1. Verfahren zur Herstellung Von Schwefel, ausgehend von Wenigstens einem $H_2S$ enthaltenden sauren Gas und einem gasförmigen oder flüssigen brennbaren Abprodukt, wobei das Verfahren einen Schritt der thermischen Umsetzung, der in einer Wärmeumsetzungstufe erfolgt und in einer schonenden Oxidation des $H_2S$ des sauren Gases und in einer vollständigen Verbrennung des brennbaren Abproduktes zur Erzeugung eines $H_2S$, $SO_2$ und dampfförmigen Schwefel enthaltenden Gasstroms besteht, ferner einen Schritt der indirekten Abkühlung des Gasstroms zur Abtrennung des Schwefels durch Kondensation und schließlich einen Schritt der katalytischen Umsetzung des aus dem Abkühlungsschritt kommenden Gasstroms umfaßt und dadurch **gekennzeichnet** ist, daß man den Schritt der thermischen Umsetzung unter Verbrennung des gasförmigen oder flüssigen brennbaren Abprodukts in einer ersten Zone der Wärmeumsetzungsstufe mit einer Menge eines Gases durchführt, das freien Sauerstoff im Überschuß, bezogen auf die theoretisch für eine vollständige Verbrennung des brennbaren Abprodukts erforderliche Menge, enthält, wobei der Überschuß unterhalb der Menge des freien Sauerstoff enthaltenden Gases liegt, die theoretisch für die Oxidation von ungefähr einem Drittel des $H_2S$ des Gesamtdurchsatzes des zu behandelnden sauren Gases zu $SO_2$ erforderlich ist, indem man einen ersten sauren Gasstrom in das in der ersten Zone der Wärmeumsetzungsstufe vorliegende Rauchgas aus der Verbrennung des brennbaren Abproduktes einspritzt, einen zweiten sauren Gasstrom in einer zweiten Zone der Wärmeumsetzungsstufe, welche die gasförmigen Produkte der ersten Zone erhält, mit einer gesteuerten Menge an freien Sauerstoff enthaltendem Gas unvollständig verbrennt, so daß das Molarverhältnis $H_2S : SO_2$ in den aus dem Schritt der katalytischen Umsetzung kommenden Gasen einen vorgegebenen Wert aufweist, und indem man die Durchflußmengen des ersten und des zweiten sauren Gasstroms so einstellt, daß die während der unvollständigen Verbrennung des zweiten sauren Gasstroms in der zweiten Zone der Wärmeumsetzungsstufe erzielte Temperatur einen Wert von über 850°C aufweist.

2. Verfahren nach Anspruch 1, dadurch **gekennzeichnet,** daß die Einstellung der Durchsätze des ersten und zweiten sauren Gasstroms so erfolgt, daß die während der unvollständigen Verbrennung des zweiten sauren Gasstroms in der zweiten Zone der Wärmeumsetzungsstufe erzielte Temperatur einen Wert von über 920°C aufweist.

3. Verfahren nach Anspruch 1 oder 2, dadurch **gekennzeichnet,** daß der vorgegebene Wert für das Molarverhältnis $H_2S : SO_2$ in den aus dem Schritt der katalytischen Umsetzung kommenden Gasen ca. 2:1 beträgt.

4. Verfahren nach einem der Ansprüche 1 bis 3, dadurch **gekennzeichnet,** daß der die zweite Zone der Wärmeumsetzungsstufe verlassende Gasstrom eine Verweilzone für die Gase durchquert, in der der Gasstrom bei einer Temperatur gehalten wird, die der Temperatur bei seinem Austritt aus der zweiten Zone entspricht oder dieser Temperatur nahe kommt.

5. Verfahren nach einem der Ansprüche 1 bis 4, dadurch **gekennzeichnet,** daß der erste und/oder der zweite saure Gasstrom Kohlenwasserstoffe in einer Gesamtkonzentration von 0,2 bis 10 und insbesondere von 0,5 bis 5 Vol.- % enthält.

6. Verfahren nach einem der Ansprüche 1 bis 5, dadurch **gekennzeichnet,** daß der erste und zweite saure Gasstrom aus zwei unterschiedlichen sauren Gasen mit identischem oder unterschiedlichem $H_2S$-Gehalt besteht.

7. Verfahren nach Anspruch 6, dadurch **gekennzeichnet,** daß der erste saure Gasstrom einen $H_2S$-Gehalt aufweist, der unterhalb von dem des zweiten sauren Gasstroms liegt.

8. Verfahren nach einem der Ansprüche 1 bis 5, dadurch **gekennzeichnet,** daß der erste und der zweite saure Gasstrom aus einer ersten Fraktion eines einzigen sauren Gases bzw. aus der restlichen Fraktion dieses einzigen sauren Gases besteht.

9. Verfahren nach einem der Ansprüche 3 bis 8, dadurch **gekennzeichnet,** daß das brennbare Abprodukt ein gasförmiges oder flüssiges Rückstandabprodukt ist, das zu $SO_2$ oxidierbare Schwefelverbindungen und gegebenenfalls Ammoniak oder Stickstoffverbindungen wie HCN enthält, wohingegen wenigstens der zweite saure Gasstrom einen $H_2S$-Gehalt von über 15 Vol.- % aufweist, der Durchsatz an brennbarem Abprodukt und der Gesamtdurchsatz an erstem und zweitem sauren Gasstrom so geartet sind, daß der molare Durchsatz X des während der Verbrennung des brennbaren Abproduktes gebildeten $SO_2$ unterhalb der Hälfte des gesamten Moldurchsatzes Y des von den sauren Gasströmen zugeführten $H_2S$ liegt und der Überschuß des freien Sauerstoff enthaltenden Gases im Verhältnis zur für eine vollständige Verbrennung des brennbaren Abproduktes theoretisch erforderlichen Menge einem Molardurchsatz an Sauerstoff von unter

$$\frac{(Y-2X)}{2}$$

entspricht.

10. Verfahren nach einem der Ansprüche 1 bis 8, dadurch **gekennzeichnet,** daß das brennbare Abprodukt aus einem Heizgas besteht, wohingegen der erste und der zweite saure Gasstrom einen $H_2S$-Gehalt von unter 35 Vol.- % aufweisen.

11. Wärmereaktor zur Durchführung einer schonenden Oxidation des $H_2S$ aus wenigstens einem $H_2S$ enthaltenden sauren Gas und zur gleichzeitigen vollständigen Verbrennung eines gasförmigen oder flüssigen brennbaren Abproduktes zur Erzeugung eines $H_2S$, $SO_2$ und dampfförmigen Schwefel enthaltenden Gasstroms, wobei dieser Reaktor eine erste Kammer (2) aus einem Feuerfeststoff, die ein geschlossenes Ende, das mit einem Brenner (6) ausgestattet ist, der Einrichtungen (7) für die Zufuhr eines brennbaren gasförmigen oder flüssigen Abproduktes sowie Einrichtungen (8) für die Zufuhr eines freien Sauerstoff enthaltenden Gases bei regelbarem Durchsatz besitzt, und ein Ende aufweist, das mit einer den Ausgang bildenden Öffnung (33) ausgestattet ist, und eine zweite Kammer (3) aus Feuerfeststoff umfaßt, die unterhalb der ersten Kammer angeordnet ist, wobei die zweite Kammer eine Eintrittsöffnung, die mit dem Ausgang (33) der ersten Kammer in Verbindung steht, und eine den Ausgang bildende Öffnung besitzt, wobei diese zweite Kammer außerdem mit einem Brenner (9) ausgestattet ist, der über Einrichtungen (10) für die Zufuhr eines zweiten sauren Gasstroms und Einrichtungen (11) für die Zufuhr von freien Sauerstoff enthaltendem Gas bei regelbarem Durchsatz (12) besitzt, wobei der Reaktor dadurch **gekennzeichnet** ist, daß er einerseits Einrichtungen (43) zum Einspritzen eines ersten sauren Gasstroms in die erste Kammer (2) und andererseits Einrichtungen (28) zur Regelung des Durchsatzes umfaßt, die eingebaut sind, um das Durchsatzverhältnis zwischen erstem und zweitem sauren Gasstrom zu steuern, indem man auf den Durchsatz des einen oder des anderen Gasstroms einwirkt.

12. Reaktor nach Anspruch 11, dadurch **gekennzeichnet,** daß er noch eine dritte Kammer (4) aus Feuerfeststoff umfaßt, wobei diese dritte Kammer eine Eintrittsöffnung, die mit dem Ausgang der zweiten Kammer über eine zellig aufgebaute Trennwand (5) aus Feuerfeststoff in Verbindung steht, und eine den Ausgang des Wärmereaktors bildende Öffnung (42) aufweist.

13. Reaktor nach Anspruch 11 oder 12, dadurch **gekennzeichnet,** daß die Einrichtungen (43) zum Einspritzen des ersten sauren Gasstroms in die erste Kammer (2) über eine Leitung (13) mit den Einrichtungen (10) für die Zufuhr des zweiten sauren Gasstroms, mit denen der Brenner (9) der zweiten Kammer (3) ausgestattet ist, so verbunden sind, daß der erste saure Gasstrom eine erste Fraktion eines einzigen sauren Gases bildet, während der zweite Gasstrom die restliche Fraktion des einzigen sauren Gases bildet.

**14.** Reaktor nach Anspruch 13, dadurch **gekennzeichnet,** daß die Einrichtungen für die Regelung des Durchsatzes des ersten und des zweiten sauren Gasstroms ein Ventil mit regelbarem Öffnungsgrad umfassen, das in die Leitung (13) eingebaut ist, welche die Einrichtungen (43) für die Einspritzung des ersten sauren Gasstroms in die erste Kammer (2) mit den Einrichtungen (10) für die Zufuhr des zweiten sauren Gasstroms, mit denen der Brenner (9) der zweiten Kammer (3) ausgestattet ist, verbindet.

**15.** Reaktor nach Anspruch 13 oder 14, dadurch **gekennzeichnet,** daß die Einrichtungen (43) für die Einspritzung des ersten sauren Gasstroms in die erste Kammer (2) Einspritzeinrichtungen sind, die einerseits eine ringförmige Rohrleitung (44), welche die erste Kammer (2) umgibt und mit der Leitung (13) verbunden ist, welche die Einspritzeinrichtungen mit den Einrichtungen (10) für die Zufuhr des zweiten sauren Gasstroms, mit denen der Brenner (9) der zweiten Kammer (3) ausgestattet ist, verbindet. und andererseits eine Viezahl von Rohrelementen (45) umfaßt, von denen jedes an einem Ende (46) mit der ringförmigen Rohrleitung (44) verbunden ist und die Wandung (30) der ersten Kammer (2) durchquert, um mit seinem anderen Ende (47) in die erste Kammer einzumünden.

**16.** Reaktor nach einem der Ansprüche 11 bis 15, dadurch **gekennzeichnet,** daß die erste Kammer (2) des Wärmereaktors durch eine wabenartig strukturierte Wand (48) aus Feuerfeststoff, die senkrecht zur Längsachse der Kammer verläuft und zwischen dem Brenner (6) und den Einrichtungen (43) für die Einspritzung des ersten sauren Gasstroms, mit denen diese Kammer ausgestattet ist, angeordnet ist, in zwei Abschnitte unterteilt ist.

# FIG.1

## FIG. 2a

## FIG. 2b